# EUROPEAN PATENT APPLICATION

(11) **EP 3 133 002 A1**
(43) Date of publication of application: **22.02.2017**
(21) Application number: 16175433.8
(22) Date of filing: 21.06.2016
(51) Int. Cl.: B62J 1/00

(54) **CYCLING SADDLE**

(30) Priority: 22.06.2015 IT UB20155146 U
(71) Applicant: G.R. Bike S.r.l., 35127 Padova Frazione Camin (IT)
(72) Inventor: RIZZATO, Andrea, 35031 ABANO TERME PD (IT); RIZZATO, Gildo, 35031 ABANO TERME PD (IT)
(74) Representative: Modiano, Micaela Nadia

(57) **Abstract**

A cycling saddle (10), comprising a frame (11), a shell (12) and a pad (13), the shell (12) comprising a front part (15), which has a predominantly longitudinal extension, a wider rear part (16), and being provided with a central opening (17) for lightening the resting pressure, which corresponds to an equally contoured central opening (14) in the pad (13). Below the shell (12), in the configuration for use, there is a contoured flat element (18) for covering the central opening (17) and for protecting the shell (12).

## Description

The present invention relates to a cycling saddle.

Typically, in a cycling saddle for racing bicycles, mountain bikes, city bikes and the like, four parts can be distinguished: the frame, the shell, the padding and the covering, of which the frame and the shell have a structural function.

In known saddles the shell has a substantially concave contour, with the concavity directed downward over its entire length, so that the frame, which is usually a metallic bar that is bent so as to form three points for fixing to the shell, one front point and two rear points, is arranged mostly inside the concavity, substantially disappearing from view.

In an increasingly widespread manner, saddles for cycling disciplines in which the cyclist is required to sit on the saddle for long periods have a central through opening that has a predominantly longitudinal extension at the prostatic compression region.

This region is in fact particularly important for the well-being and health of the cyclist.

In particular, in professional, semiprofessional but also amateur male cyclists, prolonged compression and stressing of the pubic-prostatic region can cause disorders of the prostate, the bladder and the genitals.

The saddle with central opening has the goal of reducing the compression of the prostatic-perineal region.

Such a saddle, although widespread and appreciated, has an important limitation in that splashes of water and other debris lifted by the front wheel during a race can rise from the central opening and can encounter the shorts of the cyclist, wetting or dirtying them and making it unpleasant and therefore uncomfortable to sit.

Furthermore, in similar saddles of a known type, the joining regions between said pad and the lateral edges of said shell are visible and are subjected to the aggression of bad weather and to friction during use; these events, if combined, can lead to an unwanted separation of the pad from the shell in these regions.

The aim of the present invention is to provide a cycling saddle that can be set up so that the provided support and comfort can be optimum for every saddle resting part.

Within this aim, an object of the invention is to provide a saddle by way of which the prostatic-perineal region of an athlete who sits on it is lightened and at the same time protected.

Another object of the invention is to provide a saddle with improved aerodynamics.

Another object of the invention is to provide a saddle in which the joining regions between the shell and the pad, or pad covering, are more protected and sheltered from wear and bad weather than known saddles.

This aim and these and other objects that will become better apparent hereinafter are achieved by a cycling saddle, comprising a frame, a shell and a pad, said shell comprising a front part, which has a predominantly longitudinal extension, a wider rear part, and being provided with a central opening for lightening the resting pressure, said cycling saddle being characterized in that below said shell, in the configuration for use, there is a contoured flat element for covering said central opening and for protecting said shell.

Further characteristics and advantages of the invention will become better apparent from the description of a preferred but not exclusive embodiment of the saddle according to the invention, illustrated by way of nonlimiting example in the accompanying drawings, wherein:
Figure 1 is an exploded perspective view of a saddle according to the invention;
Figure 2 is a partially exploded sectional side view of the saddle according to the invention;

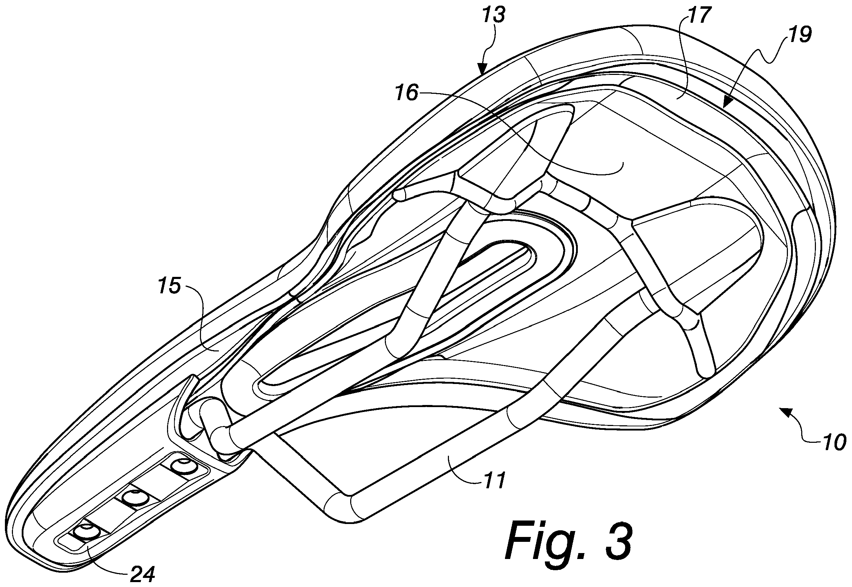

Figure 3 is a sectional side view, in the assembled condition, of the saddle according to the invention;
Figure 4 is a perspective view of a contoured flat element for covering the saddle according to the invention;

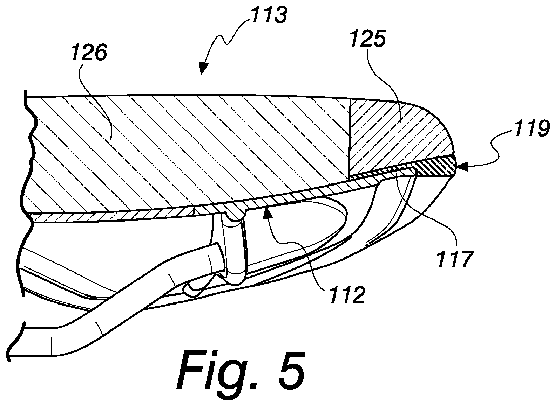

Figure 5 is a further perspective view of a contoured flat element for covering the saddle according to the invention;
Figure 6 is a perspective view of a contoured flat element for covering the saddle according to the invention in a constructive variation thereof.

With reference to the figures, a cycling saddle according to the invention is designated generally by the reference numeral 10.

The saddle 10 comprises a load-bearing frame 11, a shell 12 and a pad 13.

The shell 12 comprises a front part 15, which has a predominantly longitudinal extension, a wider rear part 16, and is provided with a central opening 17 for lightening the resting pressure, which corresponds to an equally contoured central opening 14 on the pad 13. The particularity of the cycling saddle 10 according to the invention resides in that below the shell 12, in the configuration for use, there is a contoured flat element 18 for covering the central opening 17 and for protecting the shell 12.

The contoured flat element 18 is extended with its lateral edges 19 and 20 so as to affect part of the lateral perimetric edges 21 and 22 of the shell 12, so as to cover the joining lines between the pad 13 and the lateral perimetric edges 21 and 22 of the shell 12.

The contoured flat element 18 is made for example of material comprising carbon fibers.

The contoured flat element 18 has an aerodynamic profile and lines, with a generally concave contour with the concavity directed downward in the configuration for use, so as to limit as much as possible the aerodynamic drag that is generally generated under the saddle.

The contoured flat element 18 has a central raised portion 24 that is shaped complementarily with respect to the central opening 17 on the shell 12 and is intended to close the central opening 17.

The raised portion 24 is contoured to occupy only the space of the central opening 17 on the shell 12 and not to invade the space of the central opening 14 of the pad 13, so that the pressure lightening function sought by means of the central opening 14 is in any case fully achieved.

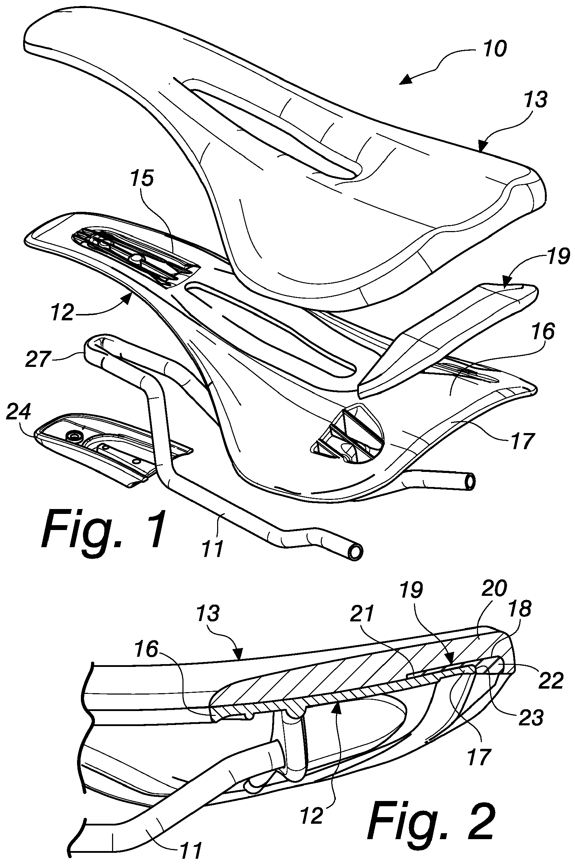

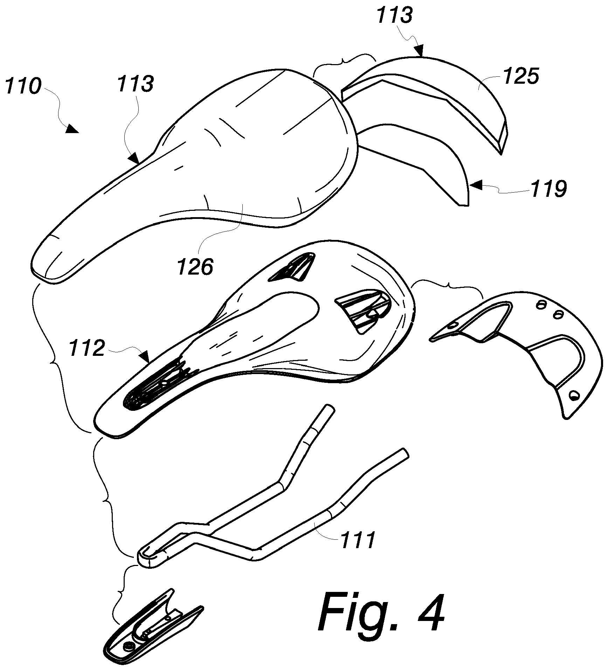

Centering ribs 25 and 26 are defined below the shell 12 for corresponding recesses 27 and 28 defined on the contoured flat element 18, defined so as to surround the central raised portion 24, as in Figures 2 and 4.

The contoured flat element 18 is glued to the shell 12.

The load-bearing frame 11 is constituted by a bar that is bent to define a front coupling point 29 and two rear coupling points 30 and 31.

The saddle 10 is completed by a supporting body 32 that is contoured to accommodate the front coupling point 29 of the load-bearing frame 11 and to be locked to the front part 15 of the shell 12, by means of screws or other fixing means of a known type.

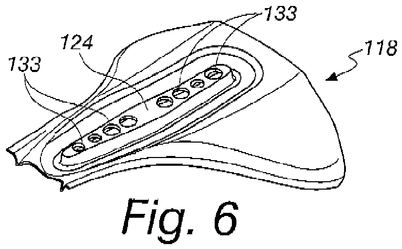

Figure 6 shows a constructive variation of a contoured flat element, designated therein by the numeral 118.

In this constructive variation, the contoured flat element 118 has, on the central raised portion 124, a plurality of through holes that allow the passage of air toward the prostatic-perineal region of the athlete.

In practice it has been found that the invention achieves the intended aim and objects.

In particular, the invention provides a cycling saddle that can be set up so that the support and comfort provided are optimum for every resting part of the saddle.

In fact, the invention provides a saddle by way of which the prostatic-perineal region of an athlete who sits on it is lightened and at the same time protected by way of the contoured flat element arranged under the shell.

Moreover, the invention provides a saddle that has improved aerodynamics.

Moreover, the invention provides a saddle in which the joining regions between the shell and the pad or pad covering, are more protected and sheltered from wear and bad weather than known saddles by way of the lateral edges of such contoured flat element.

The invention thus conceived is susceptible of numerous modifications and variations, all of which are within the scope of the appended claims; all the details may further be replaced with other technically equivalent elements.

In practice, the components and materials used, so long as they are compatible with the specific use, as well as the contingent shapes and dimensions, may be any according to requirements and to the state of the art.

The disclosures in Italian utility model application no. 202015000025965 (UB2015U045146), from which this application claims priority, are incorporated herein by reference.

Where technical features in the claims are followed by numeric references and/or acronyms, said numeric references and/or acronyms have been added for the sole purpose of increasing the intelligibility of the claims and accordingly such numeric references and/or acronyms do not have any effect on the scope of each element identified solely by way of example by said numeric references and/or acronyms.

## Claims

1. A cycling saddle (10), comprising a frame (11), a shell (12) and a pad (13), said shell (12) comprising a front part (15), which has a predominantly longitudinal extension, a wider rear part (16), and being provided with a central opening (17) for lightening the resting pressure, which corresponds to an equally contoured central opening (14) in the pad (13), said cycling saddle being **characterized in that** below said shell (12), in the configuration for use, there is a contoured flat element (18) for covering said central opening (17) and for protecting said shell (12).

2. The cycling saddle according to claim 1, **characterized in that** said contoured flat element (18) is extended with its lateral edges (19, 20) so as to affect part of the lateral perimetric edges (21, 22) of said shell (12), so as to cover the joining lines between said pad (13) and said lateral perimetric edges of said shell (12).

3. The cycling saddle according to one or more of the preceding claims, **characterized in that** said contoured flat element (18) is made of a material that comprises carbon fibers.

4. The cycling saddle according to one or more of the preceding claims, **characterized in that** said contoured flat element (18) has an aerodynamic profile and lines, with a generally concave contour with the concavity directed downward in the configuration for use.

5. The cycling saddle according to one or more of the preceding claims, **characterized in that** said contoured flat element (18) has a central raised portion (24) that is shaped complementarily with respect to the central opening (17) on the shell (12), preset to close said central opening (17).

6. The cycling saddle according to one or more of the preceding claims, **characterized in that** said raised portion (24) is contoured to occupy the space of only the central opening (17) on the shell (12).

7. The cycling saddle according to one or more of the preceding claims, **characterized in that** below the shell (12) there are centering ribs (25, 26) for corresponding recesses (27, 28) that are defined on the contoured flat element (18) and are defined so as to surround the central raised portion (24).

8. The cycling saddle according to one or more of the preceding claims, **characterized in that** a said contoured flat element (118) has, on the central raised portion (124), a plurality of through holes that allow the passage of air toward the prostatic-perineal region of the athlete.
